(19) **Europäisches Patentamt / European Patent Office / Office européen des brevets**

(11) **EP 4 725 923 A1**

(12) **EUROPEAN PATENT APPLICATION**
published in accordance with Art. 153(4) EPC

(43) Date of publication:
**15.04.2026 Bulletin 2026/16**

(21) Application number: **24861581.7**

(22) Date of filing: **07.06.2024**

(51) International Patent Classification (IPC):
$C03C\ 3/21$ (2006.01)  $C03C\ 3/062$ (2006.01)
$C03C\ 3/068$ (2006.01)

(52) Cooperative Patent Classification (CPC):
**C03C 3/062; C03C 3/066; C03C 3/068; C03C 3/21; C03C 4/00; C03C 4/20**

(86) International application number:
**PCT/CN2024/098002**

(87) International publication number:
**WO 2025/050733 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023  CN 202311149928**

(71) Applicant: **CDGM Glass Co. Ltd.**
**Chengdu, Sichuan 610100 (CN)**

(72) Inventor: **KUANG, Bo**
**Chengdu, Sichuan 610100 (CN)**

(74) Representative: **Murgitroyd & Company**
**165-169 Scotland Street**
**Glasgow G5 8PL (GB)**

(54) **OPTICAL GLASS, OPTICAL ELEMENT, AND OPTICAL INSTRUMENT**

(57)     The present application provides an optical glass, the components of which, in percent by weight, includes: $P_2O_5$: 16% to 33%; $Nb_2O_5$: 40% to 55%; $TiO_2$: 1% to 13%; BaO: 1% to 15%; $Na_2O$: 0.5% to 15%. By optimizing the composition, the optical glass obtained by the present application achieves the desired refractive index and Abbe number, while exhibiting excellent internal quality, thereby meeting the requirements for use in high-performance optical instruments.

EP 4 725 923 A1

**Description**

TECHNICAL FIELD

The present application relates to an optical glass, particularly to an optical glass with a refractive index ranging from 1.86 to 1.93 and an Abbe number ranging from 16 to 24, as well as an optical element and an optical instrument prepared using the same.

BACKGROUND

In recent years, the rapid development in the fields such as optoelectronic information, digital displays, surveillance and security, and vehicle-mounted imaging has driven the demand for miniaturized, lightweight, and high-performing optical elements used in optical systems. High-refractive-index, high-dispersion optical glass can be coupled with low-dispersion optical glass to effectively eliminate chromatic aberration and secondary spectrum, while also effectively shortening the total optical length of the lens, thereby miniaturizing the imaging system. Therefore, this type of glass has very broad application prospects. Given the same radius of curvature, glass with a greater refractive index provides a larger imaging field of view, which can reduce the number of optical elements in an optical instrument. As optical instruments continue to trend toward miniaturization, the demand for high-refractive-index glass has become increasingly prominent.

Chinese patent document CN101792258A discloses a high-refractive-index, high-dispersion optical glass having a refractive index of 1.70 to 2.20 and an Abbe number of 10 to 40, which contains 40 mol% to 85 mol% $TeO_2$. The high concentration of $TeO_2$ renders this glass susceptible to striae resulting from volatilization during production, which is unfavorable for forming optical glass with excellent internal quality. Chinese patent document CN1204073C discloses a high-refractive-index, high-dispersion optical glass having a refractive index equal to or greater than 1.88 and an Abbe number of 22 to 28, which contains 15 wt% to 25 wt% $SiO_2$; however, its meltability needs further improvement.

SUMMARY

The technical issue to be addressed by the present application is to provide an optical glass having a refractive index ranging from 1.86 to 1.93 and an Abbe number ranging from 16 to 24 with excellent internal quality.

The technical solutions adopted to address the technical issue in the present application are as follows:

An optical glass includes the following components in percent by weight: $P_2O_5$: 16% to 33%; $Nb_2O_5$: 40% to 55%; $TiO_2$: 1% to 13%; BaO: 1% to 15%; $Na_2O$: 0.5% to 15%.

Further, the optical glass further includes the following components in percent by weight: CaO: 0 to 8%; and/or MgO: 0 to 5%; and/or SrO: 0 to 5%; and/or ZnO: 0 to 8%; and/or $Li_2O$: 0 to 5%; and/or $K_2O$: 0 to 5%; and/or $Ln_2O_3$: 0 to 5%; and/or $SiO_2$: 0 to 5%; and/or $B_2O_3$: 0 to 5%; and/or $Al_2O_3$: 0 to 3%; and/or $WO_3$: 0 to 3%; and/or $ZrO_2$: 0 to 5%; and/or $Bi_2O_3$: 0 to 3%; and/or $TeO_2$: 0 to 5%; and/or a clarifying agent: 0 to 1%, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

An optical glass consisting of the following components in percent by weight: $P_2O_5$: 16% to 33%; $Nb_2O_5$: 40% to 55%; $TiO_2$: 1% to 13%; BaO: 1% to 15%; $Na_2O$: 0.5% to 15%; CaO: 0 to 8%; MgO: 0 to 5%; SrO: 0 to 5%; ZnO: 0 to 8%; $Li_2O$: 0 to 5%; $K_2O$: 0 to 5%; $Ln_2O_3$: 0 to 5%; $SiO_2$: 0 to 5%; $B_2O_3$: 0 to 5%; $Al_2O_3$: 0 to 3%; $WO_3$: 0 to 3%; $ZrO_2$: 0 to 5%; $Bi_2O_3$: 0 to 3%; $TeO_2$: 0 to 5%; a clarifying agent: 0 to 1%, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

Further, in the optical glass, the weight ratio of ($B_2O_3$+$WO_3$+$Bi_2O_3$) to ZnO is equal to or lower than 2.0, preferably is equal to or lower than 1.0, more preferably is equal to or lower than 0.5, and even more preferably is equal to or lower than 0.2.

Further, in the optical glass, the weight ratio of ZnO to BaO is equal to or lower than 3.0, preferably is in a range from 0.05 to 2.0, more preferably is in a range from 0.1 to 1.5, and even more preferably is in a range from 0.2 to 0.8.

Further, in the optical glass, the weight ratio of ($B_2O_3$+$Li_2O$+$K_2O$) to ZnO is equal to or lower than 2.0, preferably is equal to or lower than 1.0, more preferably is equal to or lower than 0.5, and even more preferably is equal to or lower than 0.2.

Further, in the optical glass, the weight ratio of ($P_2O_5$+BaO) to (ZnO+CaO) is equal to or lower than 2.0, preferably is in a range from 3.0 to 20.0, more preferably is in a range from 5.0 to 15.0, and even more preferably is in a range from 8.0 to 12.0.

Further, in the optical glass, the weight ratio of ($Na_2O$+$K_2O$) to $Nb_2O_5$ is in a range from 0.05 to 0.45, preferably in a range from 0.1 to 0.4, more preferably in a range from 0.1 to 0.3, and even more preferably in a range from 0.1 to 0.25.

Further, the weight ratio of (BaO+$K_2O$+ZnO) to ($Na_2O$+CaO) is in a range from 0.1 to 8.0, preferably is in a range from 0.2 to 5.0, more preferably is in a range from 0.3 to 2.5, and even more preferably is in a range from 0.5 to 1.5.

Further, in the optical glass, the weight ratio of $(TiO_2+K_2O)$ to $P_2O_5$ is in a range from 0.05 to 0.8, preferably is in a range from 0.1 to 0.6, more preferably is in a range from 0.1 to 0.5, and even more preferably is in a range from 0.15 to 0.4.

Further, in the optical glass, the weight ratio of $(Ln_2O_3+Li_2O+K_2O+WO_3+Bi_2O_3)$ to $TiO_2$ is equal to or lower than 0.8, preferably is equal to or lower than 0.5, more preferably is equal to or lower than 0.3, and even more preferably is equal to or lower than 0.1, wherein $Ln_2O_3$ is one or more selected from $La_2O_3$, $Gd_2O_3$, $Y_2O_3$, $Yb_2O_3$ and $Lu_2O_3$.

Further, in the optical glass, the weight ratio of $(WO_3+TiO_2)$ to $Nb_2O_5$ is in a range from 0.02 to 0.3, preferably is in a range from 0.05 to 0.25, more preferably is in a range from 0.05 to 0.2, and even more preferably is in a range from 0.07 to 0.17.

Further, in the optical glass, the weight ratio of ZnO to $TiO_2$ is equal to or lower than 3.0, preferably is in a range from 0.01 to 2.0, more preferably is in a range from 0.1 to 1.5, and even more preferably is in a range from 0.2 to 0.8.

Further, in the optical glass, the weight ratio of $TiO_2$ to BaO is in a range from 0.2 to 8.0, preferably is in a range from 0.3 to 5.0, more preferably is in a range from 0.5 to 3.0, and even more preferably is in a range from 0.6 to 1.5.

Further, in the optical glass, the weight ratio of ZnO to $(Na_2O+TiO_2)$ is equal to or lower than 2.0, preferably is in a range from 0.01 to 1.5, more preferably is in a range from 0.05 to 0.8, and even more preferably is in a range from 0.05 to 0.4.

Further, in the optical glass, the weight ratio of $TiO_2$ to CaO is in a range from 0.5 to 10.0, preferably is in a range from 1.0 to 8.0, more preferably is in a range from 2.0 to 7.0, and even more preferably is in a range from 2.5 to 6.0.

Further, in the optical glass, the components in percent by weight satisfy: $P_2O_5$: 20% to 30%, preferably $P_2O_5$: 22% to 28%; and/or $Nb_2O_5$: 45% to 55%, preferably $Nb_2O_5$: 46% to 53%; and/or $TiO_2$: 3% to 10%, preferably $TiO_2$: 4% to 8%; and/or BaO: 2% to 12%, preferably BaO: 3% to 9%; and/or $Na_2O$: 3% to 12%, preferably $Na_2O$: 6% to 10%; and/or CaO: more than 0 but less than or equal to 6%, preferably CaO: 1% to 4%; and/or MgO: 0 to 3%, preferably MgO: 0 to 1%; and/or SrO: 0 to 3%, preferably SrO: 0 to 1%; and/or ZnO: more than 0 but less than or equal to 6%, preferably ZnO: 1% to 4%; and/or $Li_2O$: 0 to 3%, preferably $Li_2O$: 0 to 1%; and/or $K_2O$: 0 to 3%, preferably $K_2O$: 0 to 1%; and/or $Ln_2O_3$: 0 to 3%, preferably $Ln_2O_3$: 0 to 1%; and/or $SiO_2$: 0 to 3%, preferably $SiO_2$: 0 to 1%; and/or $B_2O_3$: 0 to 3%, preferably $B_2O_3$: 0 to 1%; and/or $Al_2O_3$: 0 to 2%, preferably $Al_2O_3$ 0 to 1%; and/or $WO_3$: 0 to 2%, preferably $WO_3$: 0 to 1%; and/or $ZrO_2$: 0 to 3%, preferably $ZrO_2$: 0 to 1%; and/or $Bi_2O_3$: 0 to 2%, preferably $Bi_2O_3$: 0 to 1%; and/or $TeO_2$: 0 to 3%, preferably $TeO_2$: 0 to 1%; and/or the clarifying agent: 0 to 0.5%, preferably the clarifying agent: 0 to 0.1%, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

Further, the optical glass includes no MgO; and/or includes no SrO; and/or includes no $Li_2O$; and/or includes no $K_2O$; and/or includes no $Ln_2O_3$; and/or includes no $B_2O_3$; and/or includes no $Al_2O_3$; and/or includes no $WO_3$; and/or includes no $ZrO_2$; and/or includes no $Bi_2O_3$; and/or includes no $TeO_2$; and/or includes no clarifying agent, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

Further, the refractive index $n_d$ of the optical glass is in a range from 1.86 to 1.93, preferably in a range from 1.87 to 1.92, and more preferably in a range from 1.88 to 1.91; the Abbe number $v_d$ is in a range from 16 to 24, preferably in a range from 17 to 23, and more preferably in a range from 18 to 22.

Further, the thermal expansion coefficient $\alpha_{100/300°C}$ of the optical glass is equal to or less than $95\times10^{-7}$/K, preferably is equal to or less than $90\times10^{-7}$/K, and more preferably is equal to or less than $85\times10^{-7}$/K; and/or the durability of acid $D_A$ of the optical glass is equal to or better than grade 2, preferably is grade 1; and/or the durability of water Dw of the optical glass is equal to or better than grade 2, preferably is grade 1; and/or the relative partial dispersion $P_{g,F}$ of the optical glass is in a range from 0.58 to 0.72, preferably in a range from 0.60 to 0.68, and more preferably in a range from 0.63 to 0.66; and/or the deviation of relative partial dispersion $\Delta P_{g,F}$ of the optical glass is equal to or less than 0.08, preferably is in a range from 0.01 to 0.06, and more preferably is in a range from 0.02 to 0.05; and/or the glass transition temperature $T_g$ of the optical glass is equal to or lower than 670 °C, preferably is equal to or lower than 660 °C, and more preferably is equal to or lower than 650 °C; and/or the abrasion hardness $F_A$ of the optical glass is in a range from 230 to 270, preferably in a range from 240 to 265, and more preferably in a range from 245 to 260; and/or the density $\rho$ of the optical glass is equal to or less than 3.90 g/cm$^3$, preferably is equal to or less than 3.80 g/cm$^3$, and more preferably is equal to or less 3.70 g/cm$^3$; and/or $\lambda_{70}$ of the optical glass is equal to or less than 440 nm, preferably is equal to or less than 430 nm, and more preferably is equal to or less than 425 nm; and/or $\lambda_5$ of the optical glass is equal to or less than 400 nm, preferably is equal to or less than 390 nm, and more preferably is equal to or less than 385 nm; and/or the climatic resistance CR of the optical glass is equal to or better than grade 2, preferably is grade 1; and/or the Young's modulus E of the optical glass is equal to or greater than $8000\times10^7$ Pa, preferably is equal to or greater than $9000\times10^7$ Pa, and more preferably is equal to or greater than $9500\times10^7$ Pa; and/or the bubble grade of the optical glass is equal to or better than grade A, preferably is equal to or better than grade $A_0$, and more preferably is grade $A_{00}$.

A glass preform is made of the above-described optical glass.

An optical element is made of the above-described optical glass or made from the above-described glass preform.

An optical instrument includes the above-described optical glass or includes the above-described optical element.

The beneficial effects of the present application are as follows: By optimizing the composition, the optical glass obtained by the present application achieves the desired refractive index and Abbe number, while exhibiting excellent internal quality, thereby meeting the requirements for use in high-performance optical instruments.

DETAILED DESCRIPTION

The specific implementations of the optical glass of the present application are described in detail below. However, the present application is not limited to the following implementations and can be implemented in modified ways without departing from achieving the objective of the present application. In addition, descriptions may be appropriately omitted to avoid repeated description, which should not be construed as limiting the present application. In the following description, the optical glass of the present application may sometimes be referred to briefly as glass.

[Optical Glass]

The contents of the components (ingredients) of the optical glass of the present application are described below. In the present application, unless otherwise specified, the content of each component and the total content of the components are expressed in percent by weight (wt%); that is, the content of each component and the total content of the components are expressed as weight percentages relative to the total weight of the converted oxide composition of the glass substance. Here, the "converted oxide composition" means that, when raw materials, in forms of oxides, composite salts, hydroxides, etc., for the components of the optical glass of the present application decompose and are converted into oxides upon melting, the total weight of such oxides is taken as 100%.

Unless otherwise indicated in specific cases, the numerical ranges listed in the present application include the upper and lower limits, the terms "above" and "below" include the endpoint values, and include all integers and fractions within the ranges, without being limited to the specific values listed when defining the ranges. The term "and/or" as used herein is inclusive; for example, "A and/or B" means A only, B only, or both A and B.

<Essential Components and Optional Components>

$P_2O_5$ is the network builder of the glass of the present application. Compared with silicate glass, phosphate glass can be melted at lower temperatures, which is beneficial for improving the light transmittance of the glass. If the content of $P_2O_5$ is too high, it becomes difficult for the glass to achieve a greater refractive index. Therefore, in the present application, the content of $P_2O_5$ is in a range from 16% to 33%, preferably in a range from 20% to 30%, and more preferably in a range from 22% to 28%.

$Nb_2O_5$ is a high-refractive-index, high-dispersion component that can increase the refractive index and devitrification resistance of the glass, and can reduce the relative partial dispersion ($P_{g,F}$) and the deviation of relative partial dispersion ($\Delta_{Pg,F}$) of the glass. In the present application, the glass includes 40% or more of $Nb_2O_5$ to achieve the above effects. The lower limit of the content of $Nb_2O_5$ is preferably 45%, and more preferably 46%. If the content of $Nb_2O_5$ exceeds 55%, the thermal stability and chemical stability of the glass decrease, and the light transmittance of the glass decreases. Therefore, in the present application, the upper limit of the content of $Nb_2O_5$ is 55%, and preferably is 53%.

$TiO_2$ exhibits high-refractive-index and high-dispersion properties, can improve the chemical stability of the glass, and adjust the relative partial dispersion (($P_{g,F}$) and the deviation of relative partial dispersion (($\Delta_{Pg,F}$) of the glass. If the content of $TiO_2$ is too high, the devitrification resistance and light transmittance of the glass decrease. Therefore, the content of $TiO_2$ is in a range from 1% to 13%, preferably in a range from 3% to 10%, and more preferably in a range from 4% to 8%.

BaO can improve the devitrification resistance and hardness of the glass, and reduce the temperature coefficient of refractive index and the thermal expansion coefficient of the glass. In the present application, the glass includes 1% or more of BaO to achieve the above effects. The content of BaO is preferably higher than or equal to 2%, and more preferably higher than or equal to 3%. On the other hand, the content of BaO is equal to or lower than 15%, so as to prevent a decrease in chemical stability caused by an excessively high BaO content. Therefore, the content of BaO is equal to or lower than 15%, preferably is equal to or lower than 12%, and more preferably is equal to or lower than 9%.

In some embodiments, controlling the ratio $TiO_2/BaO$ between the content of $TiO_2$ and the content of BaO in a range from 0.2 to 8.0 is beneficial for improving the chemical stability of the glass and reducing the thermal expansion coefficient of the glass. Therefore, $TiO_2/BaO$ is preferably in a range from 0.2 to 8.0, and more preferably in a range from 0.3 to 5.0. Further, controlling $TiO_2/BaO$ in a range from 0.5 to 3.0 can further optimize the abrasion hardness of the glass and make it easier for the glass to achieve the desired $P_{g,F}$ and $\Delta P_{g,F}$ values. Therefore, $TiO_2/BaO$ is further preferably in a range from 0.5 to 3.0, and even more preferably in a range from 0.6 to 1.5.

CaO is beneficial for adjusting the optical constants of the glass and improving the processability and climatic resistance of the glass. However, if the content of CaO is excessively high, the devitrification resistance of the glass deteriorates. Therefore, the content of CaO is in a range from 0 to 8%, preferably higher than 0 but lower than or equal to 6%, and more preferably in a range from 1% to 4%.

In some embodiments, controlling the ratio $TiO_2/CaO$ between the content of $TiO_2$ and the content of CaO in a range from 0.5 to 10.0 is beneficial for reducing the thermal expansion coefficient of the glass and optimizing the Young's modulus and abrasion hardness of the glass. Therefore, $TiO_2/CaO$ is preferably in a range from 0.5 to 10.0, more preferably in a range from 1.0 to 8.0, further preferably in a range from 2.0 to 7.0, and even more preferably in a range from 2.5 to 6.0.

SrO can adjust the refractive index and dispersion of the glass, but if the content of SrO is excessively high, the chemical stability of the glass decreases, and the cost of the glass increases. Therefore, the content of SrO is in a range from 0 to 5%, preferably in a range from 0 to 3%, and more preferably in a range from 0 to 1%. In some embodiments, further preferably, the glass includes no SrO.

MgO is beneficial for reducing the density and melting temperature of the glass, but if the content of MgO is excessively high, it is difficult for the refractive index of the glass to meet the desired requirements, and the devitrification resistance and stability of the glass decrease. Therefore, the content of MgO is in a range from 0 to 5%, preferably in a range from 0 to 3%, and more preferably in a range from 0 to 1%. In some embodiments, further preferably, the glass includes no MgO.

ZnO can reduce the glass transition temperature and melting temperature, improve the chemical stability of the glass, and reduce the high-temperature viscosity of the glass. If the content of ZnO is excessively high, the devitrification resistance of the glass deteriorates, and due to excessively low viscosity, devitrification is likely to occur. Therefore, in the present application, the content of ZnO is in a range from 0 to 8%, preferably higher than 0 but lower than or equal to 6%, and more preferably in a range from 1% to 4%.

In some embodiments, controlling the ratio $ZnO/(Na_2O+TiO_2)$ between the content of ZnO and the total content of $Na_2O$ and $TiO_2$ to be equal to or lower than 2.0 can prevent an increase in the glass transition temperature while improving the bubble grade of the glass. Therefore, $ZnO/(Na_2O+TiO_2)$ is preferably equal to or lower than 2.0, and more preferably in a range from 0.01 to 1.5. Further, controlling $ZnO/(Na_2O+TiO_2)$ in a range from 0.05 to 0.8 can further optimize the abrasion hardness and climatic resistance of the glass. Therefore, $ZnO/(Na_2O+TiO_2)$ is further preferably in a range from 0.05 to 0.8, and even more preferably in a range from 0.05 to 0.4.

In some embodiments, controlling the ratio $(P_2O_5+BaO)/(ZnO+CaO)$ between the total content of $P_2O_5$ and BaO and the total content of ZnO and CaO to be equal to or higher than 2.0 can improve the light transmittance of the glass while preventing deterioration of the glass transition temperature. Therefore, $(P_2O_5+BaO)/(ZnO+CaO)$ is preferably equal to or higher than 2.0, and more preferably in a range from 3.0 to 20.0. Further, controlling $(P_2O_5+BaO)/(ZnO+CaO)$ in a range from 5.0 to 15.0 can further optimize the Young's modulus and bubble grade of the glass. Therefore, $(P_2O_5+BaO)/(ZnO+CaO)$ is further preferably in a range from 5.0 to 15.0, and even more preferably in a range from 8.0 to 12.0.

In some embodiments, controlling the ratio ZnO/BaO between the content of ZnO and the content of BaO to be equal to or lower than 3.0 is beneficial for improving the climatic resistance of the glass. Therefore, ZnO/BaO is preferably equal to or lower than 3.0. Further, controlling ZnO/BaO in a range from 0.05 to 2.0 can optimize the abrasion hardness of the glass while reducing the glass transition temperature of the glass. Therefore, ZnO/BaO is more preferably in a range from 0.05 to 2.0, further preferably in a range from 0.1 to 1.5, and even more preferably in a range from 0.2 to 0.8.

In some embodiments, controlling the ratio $ZnO/TiO_2$ between the content of ZnO and the content of $TiO_2$ to be equal to or lower than 3.0 can optimize the abrasion hardness and chemical stability of the glass and prevent an increase in the glass transition temperature of the glass. Therefore, $ZnO/TiO_2$ is preferably equal to or lower than 3.0, more preferably in a range from 0.01 to 2.0, further preferably in a range from 0.1 to 1.5, and even more preferably in a range from 0.2 to 0.8.

$Li_2O$ can improve the meltability of the glass and reduce the glass transition temperature. If the content of $Li_2O$ is excessively high, it is difficult for the refractive index of the glass to meet the desired requirements, and the chemical stability of the glass deteriorates. Therefore, in the present application, the content of $Li_2O$ is in a range from 0 to 5%, preferably in a range from 0 to 3%, and more preferably in a range from 0 to 1%. In some embodiments, further preferably, the glass includes no $Li_2O$.

$Na_2O$ can improve the meltability and moldability of the glass and optimize the light transmittance of the glass. If the content of $Na_2O$ is excessively high, the thermal expansion coefficient and chemical stability of the glass deteriorate. Therefore, the content of $Na_2O$ is in a range from 0.5% to 15%, preferably in a range from 3% to 12%, and more preferably in a range from 6% to 10%.

$K_2O$ can improve the thermal stability and meltability of the glass. However, if the content of $K_2O$ is excessively high, the devitrification resistance of the glass decreases. Therefore, the content of $K_2O$ is in a range from 0 to 5%, preferably in a range from 0 to 3%, and more preferably in a range from 0 to 1%. In some embodiments, further preferably, the glass includes no $K_2O$.

In some embodiments, controlling the ratio $(Na_2O+K_2O)/Nb_2O_5$ between the total content of $Na_2O$ and $K_2O$ and the content of $Nb_2O_5$ in a range from 0.05 to 0.45 is beneficial for the glass to achieve high refractive index and high dispersion as well as the desired $P_{g,F}$ and $\Delta P_{g,F}$ values, and optimizing the devitrification resistance and abrasion hardness of the glass. Therefore, $(Na_2O+K_2O)/Nb_2O_5$ is preferably in a range from 0.05 to 0.45, more preferably in a range from 0.1 to 0.4, further preferably in a range from 0.1 to 0.3, and even more preferably in a range from 0.1 to 0.25.

In some embodiments, controlling the ratio $(TiO_2+K_2O)/P_2O_5$ between the total content of $TiO_2$ and $K_2O$ and the content of $P_2O_5$ in a range from 0.05 to 0.8 prevents deterioration of the light transmittance and Young's modulus of the glass while achieving the desired Pg,F and $\Delta P_{g,F}$ values. Therefore, $(TiO_2+K_2O)/P_2O_5$ is preferably in a range from 0.05 to 0.8, more preferably in a range from 0.1 to 0.6, further preferably in a range from 0.1 to 0.5, and even more preferably in a range from 0.15 to 0.4.

$Ln_2O_3$ (wherein $Ln_2O_3$ is one or more selected from $La_2O_3$, $Gd_2O_3$, $Y_2O_3$, $Yb_2O_3$ and $Lu_2O_3$) is a component that increases the refractive index of the glass and is an optional component in the optical glass of the present application. By controlling the content of $Ln_2O_3$ to be equal to or lower than 5%, a decrease in the devitrification resistance of the glass can be prevented. Therefore, in the present application, the content of $Ln_2O_3$ is in a range from 0 to 5%, preferably in a range from 0 to 3%, and more preferably in a range from 0 to 1%. In some embodiments, further preferably, the glass includes no $Ln_2O_3$.

In phosphate glass, $SiO_2$ can make the glass network more compact, thereby improving the chemical stability and mechanical strength of the glass. However, the phosphate glass network has poor compatibility with $SiO_2$, and when the $SiO_2$ content is excessively high, phase separation and precipitation are prone to occur. Therefore, in the present application, the content of $SiO_2$ is in a range from 0 to 5%, preferably in a range from 0 to 3%, and more preferably in a range from 0 to 1%.

$B_2O_3$ can improve the thermal stability and meltability of the glass. However, when the content of $B_2O_3$ is excessively high, the chemical stability and devitrification resistance of the glass decrease. Therefore, in the present application, the content of $B_2O_3$ is in a range from 0 to 5%, preferably in a range from 0 to 3%, and more preferably in a range from 0 to 1%. In some embodiments, further preferably, the glass includes no $B_2O_3$.

In some embodiments, controlling the ratio $(B_2O_3+Li_2O+K_2O)/ZnO$ between the total content of $B_2O_3$, $Li_2O$, and $K_2O$ and the content of ZnO to be equal to or lower than 2.0 allows the glass to achieve the desired $P_{g,F}$ and $\Delta P_{g,F}$ values and Young's modulus while preventing deterioration of the chemical stability and bubble grade of the glass. Therefore, $(B_2O_3+Li_2O+K_2O)/ZnO$ is preferably equal to or lower than 2.0, more preferably equal to or lower than 1.0, further preferably equal to or lower than 0.5, and even more preferably equal to or lower than 0.2.

In some embodiments, controlling the ratio $(BaO+K_2O+ZnO)/(Na_2O+CaO)$ between the total content of BaO, $K_2O$, and ZnO and the total content of $Na_2O$ and CaO in a range from 0.1 to 8.0 is beneficial for reducing the density and thermal expansion coefficient of the glass. Therefore, $(BaO+K_2O+ZnO)/(Na_2O+CaO)$ is preferably in a range from 0.1 to 8.0, and more preferably in a range from 0.2 to 5.0. Further, controlling $(BaO+K_2O+ZnO)/(Na_2O+CaO)$ in a range from 0.3 to 2.5 can further optimize the abrasion hardness and climatic resistance of the glass. Therefore, $(BaO+K_2O+ZnO)/(Na_2O+CaO)$ is further preferably in a range from 0.3 to 2.5, and even more preferably in a range from 0.5 to 1.5.

$Al_2O_3$ can improve the chemical stability of the glass. However, when the content of $Al_2O_3$ exceeds 3%, the meltability and light transmittance of the glass deteriorate. Therefore, in the present application, the content of $Al_2O_3$ is in a range from 0 to 3%, preferably in a range from 0 to 2%, and more preferably in a range from 0 to 1%. In some embodiments, further preferably, the glass includes no $Al_2O_3$.

$WO_3$ is an optional component that can adjust the optical constants and devitrification resistance of the glass. However, when the content of $WO_3$ is excessively high, the transmittance and crystallization resistance of the glass decrease. Therefore, the content of $WO_3$ is in a range from 0 to 3%, preferably in a range from 0 to 2%, and more preferably in a range from 0 to 1%. In some embodiments, further preferably, the glass includes no $WO_3$.

In some embodiments, controlling the ratio $(WO_3+TiO_2)/Nb_2O_5$ between the total content of $WO_3$ and $TiO_2$ and the content of $Nb_2O_5$ in a range from 0.02 to 0.3 is beneficial for reducing the density of the glass and optimizing the Young's modulus and abrasion hardness of the glass. Therefore, $(WO_3+TiO_2)/Nb_2O_5$ is preferably in a range from 0.02 to 0.3, more preferably in a range from 0.05 to 0.25, further preferably in a range from 0.05 to 0.2, and even more preferably in a range from 0.07 to 0.17.

An appropriate amount of $ZrO_2$ can increase the mechanical strength and hardness of the glass, improve the devitrification resistance of the glass, and adjust the $P_{g,F}$ and $\Delta P_{g,F}$ values of the glass. However, $ZrO_2$ is difficult to melt in phosphate glass, and an excessively high content thereof leads to difficulties in melting. Therefore, in the present application, the content of $ZrO_2$ is in a range from 0 to 5%, preferably in a range from 0 to 3%, and more preferably in a range from 0 to 1%. In some embodiments, further preferably, the glass includes no $ZrO_2$.

$Bi_2O_3$ can increase the refractive index of the glass, but $Bi_2O_3$ has a high density, which is disadvantageous for lightweight design of the glass. Therefore, in the present application, the content of $Bi_2O_3$ is in a range from 0 to 3%, preferably in a range from 0 to 2%, and more preferably in a range from 0 to 1%. In some embodiments, further preferably, the glass includes no $Bi_2O_3$.

In some embodiments, controlling the ratio $(B_2O_3+WO_3+Bi_2O_3)/ZnO$ between the total content of $B_2O_3$, $WO_3$, and $Bi_2O_3$ and the content of ZnO to be equal to or lower than 2.0 allows the glass to achieve the desired $P_{g,F}$ and $\Delta P_{g,F}$

values while optimizing the light transmittance and bubble grade of the glass and preventing an increase in the density of the glass. Therefore, $(B_2O_3+WO_3+Bi_2O_3)/ZnO$ is preferably equal to or lower than 2.0, more preferably equal to or lower than 1.0, further preferably equal to or lower than 0.5, and even more preferably equal to or lower than 0.2.

In some embodiments, controlling the ratio $(Ln_2O_3+Li_2O+K_2O+WO_3+Bi_2O_3)/TiO_2$ between the total content of $Ln_2O_3$, $Li_2O$, $K_2O$, $WO_3$, and $Bi_2O_3$ and the content of $TiO_2$ to be equal to or lower than 0.8 allows the glass to achieve the desired $P_{g,F}$ and $\Delta P_{g,F}$ values while optimizing the chemical stability and bubble grade of the glass. Therefore, $(Ln_2O_3+Li_2O+K_2O+WO_3+Bi_2O_3)/TiO_2$ is preferably equal to or lower than 0.8, more preferably equal to or lower than 0.5, further preferably equal to or lower than 0.3, and even more preferably equal to or lower than 0.1.

$TeO_2$ is an optional component that increases the refractive index of the glass and reduces the glass transition temperature of the glass. $TeO_2$ in an excessively high content can easily react with platinum vessels, shortening the service life of the platinum vessels, easily causing platinum particles to enter the glass and reducing the transmittance of the glass, and is prone to producing striae due to volatilization, thereby reducing the internal quality of the glass. Therefore, the content of $TeO_2$ is limited to be equal to or lower than 5%, preferably equal to or lower than 3%, and more preferably equal to or lower than 1%. In some embodiments, further preferably, the glass includes no $TeO_2$.

In the present application, the glass includes 0 to 1% of a clarifying agent, which is one or more selected from $Sb_2O_3$, $SnO_2$, and $CeO_2$, thereby improving the clarification effect of the glass, and increasing the bubble grade of the glass. The content of the clarifying agent is preferably in a range from 0 to 0.5%, and more preferably in a range from 0 to 0.1%. By optimizing the types and contents of the components, the optical glass of the present application has an excellent bubble grade; therefore, in some embodiments, preferably, the optical glass includes no clarifying agent. When the content of $Sb_2O_3$ exceeds 1%, the clarification performance of the glass tends to decrease, and due to $Sb_2O_3$ has a strong oxidizing effect, it promotes corrosion of platinum or platinum alloy vessels used in melting the glass as well as deterioration of molding dies. Therefore, in the present application, the content of $Sb_2O_3$ is preferably in a range from 0 to 1%, more preferably in a range from 0 to 0.5%, further preferably in a range from 0 to 0.1%, and even more preferably the glass includes no $Sb_2O_3$. $SnO_2$ can also serve as a clarifying agent. However, when the content of $SnO_2$ exceeds 1%, the glass tends to be colored, or when the glass is heated, softened, and subjected to press molding or other re-forming processes, Sn may become a starting point for crystal nucleus formation, leading to devitrification. Therefore, the content of $SnO_2$ in the present application is preferably in a range from 0 to 1%, more preferably in a range from 0 to 0.5%, further preferably in a range from 0 to 0.1%, and even more preferably the glass includes no $SnO_2$. $CeO_2$ has the same effects and content as $SnO_2$. The content of $CeO_2$ is preferably in a range from 0 to 1%, more preferably in a range from 0 to 0.5%, further preferably in a range from 0 to 0.1%, and even more preferably the glass includes no $CeO_2$.

<Components To Be Excluded>

In the glass of the present application, oxides of transition metals such as V, Cr, Mn, Fe, Co, Ni, Cu, Ag, Mo, etc., individually or in combination, even in small amounts, can cause the glass to be colored and induce absorption at specific wavelengths in the visible light spectrum, thereby impairing the visible-light transmittance of the glass of the present application. Therefore, particularly for optical glass requiring transmittance in the visible light spectrum, it is preferred to exclude these components.

Oxides of Th, Cd, Tl, Os, Be, and Se have recently been regulated as harmful chemical substances. Measures for environmental protection are required not only during glass manufacturing but also in processing and disposal after commercialization. Therefore, in cases where environmental impact is a concern, it is preferred to substantially exclude these elements, except for inevitable incorporation. As a result, the optical glass substantially contains no environmentally harmful substances. Thus, the optical glass of the present application can be manufactured, processed, and discarded without taking special environmental countermeasures.

To achieve environmental friendliness, the optical glass of the present application preferably includes neither $As_2O_3$ nor PbO.

The terms "include no" and "0%" as used herein mean that the compound, molecule, element, or the like is not intentionally added as a raw material to the optical glass of the present application. However, as the raw materials and/or equipment used in producing the optical glass may contain impurities or components not intentionally to introduce, small or trace amounts of such impurities or components may be present in the final optical glass. Such cases shall also fall within the scope of protection of the present application.

The performance of the optical glass of the present application will be described below.

<Refractive Index and Abbe Number>

The refractive index ($n_d$) and Abbe number ($v_d$) of the optical glass are measured according to the method specified in GB/T 7962.1-2010.

In some embodiments, the lower limit of the refractive index ($n_d$) of the optical glass of the present application is 1.86, preferably 1.87, and more preferably 1.88.

In some embodiments, the upper limit of the refractive index ($n_d$) of the optical glass of the present application is 1.93, preferably 1.92, and more preferably 1.91.

In some embodiments, the lower limit of the Abbe number ($v_d$) of the optical glass of the present application is 16, preferably 17, and more preferably 18.

In some embodiments, the upper limit of the Abbe number ($v_d$) of the optical glass of the present application is 24, preferably 23, and more preferably 22.

<Thermal Expansion Coefficient>

The thermal expansion coefficient ($\alpha_{100/300°C}$) of the optical glass in the range from 100 °C to 300 °C is measured according to the method specified in GB/T 7962.16-2010.

In some embodiments, the thermal expansion coefficient ($\alpha_{100/300°C}$) of the optical glass of the present application is equal to or less than $95 \times 10^{-7}/K$ or less, preferably equal to or less than $90 \times 10^{-7}/K$, and more preferably equal to or less than $85 \times 10^{-7}/K$.

<Durability of Acid>

The durability of acid ($D_A$) (powder method) of the optical glass is measured according to the method specified in GB/T 17129.

In some embodiments, the durability of acid ($D_A$) of the optical glass of the present application is equal to or better than grade 2, preferably grade 1.

<Durability of Water>

The durability of water (Dw) (powder method) of the optical glass is measured according to the method specified in GB/T 17129.

In some embodiments, the durability of water (Dw) of the optical glass of the present application is equal to or better than grade 2, preferably grade 1.

<Relative Partial Dispersion and Deviation of Relative Partial Dispersion>

The origin of the relative partial dispersion ($P_{g,F}$) and the deviation of relative partial dispersion ($\Delta_{Pg,F}$) is explained using the following formulas.

The relative partial dispersion at wavelengths x and y is expressed by the following equation (1):

$$P_{x,y}=(n_x-n_y)/(n_F-n_C) \qquad (1)$$

According to the Abbe number formula, the following equation (2) holds for most so-called "normal glasses" (H-K6 and F4 are herein selected as "normal glasses"):

$$P_{x,y}=m_{x,y} \cdot v_d+b_{x,y} \qquad (2)$$

This linear relationship is expressed with $P_{x,y}$ as the vertical axis and $v_d$ as the horizontal axis, where $m_{x,y}$ is the slope and $b_{x,y}$ is the intercept.

It is well known that rectification of secondary spectrum, i.e., achromatization for two or more wavelengths, requires at least one glass that does not conform to the above equation (2) (i.e., its $P_{x,y}$ value deviates from the Abbe empirical rule). The deviation is denoted as $\Delta P_{x,y}$, meaning that each $P_{x,y}$-$v_d$ point is shifted by $\Delta P_{x,y}$ relative to the "normal line" that conforms to equation (2). Thus, the $\Delta P_{x,y}$ value for each glass can be calculated according to the following equation (3):

$$P_{x,y}=m_{x,y} \cdot v_d+b_{x,y}+\Delta P_{x,y} \qquad (3)$$

Therefore, $\Delta P_{x,y}$ quantitatively represents the deviation characteristic of special dispersion compared with "normal glass."

Accordingly, the relative partial dispersion ($P_{g,F}$) and the deviation of relative partial dispersion ($\Delta_{Pg,F}$) can be calculated according to the following equations (4) and (5):

$$P_{g,F}=(n_g-n_F)/(n_F-n_C) \tag{4}$$

$$\Delta P_{g,F}=P_{g,F}-0.6457+0.001703v_d \tag{5}$$

In some embodiments, the lower limit of the relative partial dispersion ($P_{g,F}$) of the optical glass of the present application is 0.58, preferably 0.60, and more preferably 0.63.

In some embodiments, the upper limit of the relative partial dispersion ($P_{g,F}$) of the present application is 0.72, preferably 0.68, and more preferably 0.66.

In some embodiments, the lower limit of the deviation of relative partial dispersion ($\Delta P_{g,F}$) of the optical glass of the present application is 0.01, preferably 0.02.

In some embodiments, the upper limit of the deviation of relative partial dispersion ($\Delta_{Pg,F}$) of the optical glass of the present application is 0.08, preferably 0.06, and more preferably 0.05.

<Transition Temperature>

The transition temperature ($T_g$) of the optical glass is measured according to the method specified in GB/T 7962.16-2010.

In some embodiments, the transition temperature ($T_g$) of the optical glass of the present application is equal to or lower than 670 °C, preferably equal to or lower than 660 °C, and more preferably equal to or lower than 650 °C.

<Abrasion Hardness>

The abrasion hardness (FA) of the optical glass refers to, under the same conditions, the ratio of the abrasion loss (by volume) of the tested sample to the abrasion loss (by volume) of the standard sample (H-K9 glass) multiplying 100, expressed by the following formula:

$$F_A=V/V_0\times100=(W/\rho)/(W_0/\rho_0)\times100$$

where: V -abrasion loss by volume of the tested sample;

$V_0$-abrasion loss by volume of the standard sample;
W -abrasion loss by mass of the tested sample;
$W_0$ -abrasion loss by mass of the standard sample;
$\rho$ - density of the tested sample;
$\rho_0$ - density of the standard sample.

In some embodiments, the lower limit of the abrasion hardness ($F_A$) of the optical glass of the present application is 230, preferably 240, and more preferably 245.

In some embodiments, the upper limit of the abrasion hardness ($F_A$) of the optical glass of the present application is 270, preferably 265, and more preferably 260.

<Density>

The density ($\rho$) is measured according to the method specified in GB/T 7962.20-2010.

In some embodiments, the density ($\rho$) of the optical glass of the present application is 3.90 g/cm$^3$ or less, preferably 3.80 g/cm$^3$ or less, and more preferably 3.70 g/cm$^3$ or less.

<Coloration Degree>

The short-wavelength transmission spectrum characteristics of the glass of the present application are characterized by the coloration degree ($\lambda_{70}$ and $\lambda_5$). $\lambda_{70}$ refers to the wavelength of light to which the transmittance of the glass reaches 70%. The measurement of $\lambda_{70}$ is performed using a glass having two opposing surfaces that are parallel to each other and optically polished, with a thickness of 10±0.1 mm, by measuring the spectral transmittance in the wavelength range from 280 nm to 700 nm and determining the wavelength at which the transmittance reaches 70%. The term "spectral transmittance" or "transmittance" refers to the ratio represented by $I_{out}/I_{in}$, where $I_{in}$ is the intensity of light incident perpendicularly to the surface of the glass, and $I_{out}$ is the intensity of light transmitted through the glass and emitted from the opposite surface, including the transmittance loss due to surface reflection on the glass surfaces. The greater the refractive index of the glass, the greater the surface reflection losses. Therefore, in high-refractive-index glass, a small value of $\lambda_{70}$ indicates minimal coloration of the glass itself and high light transmittance.

In some embodiments, $\lambda_{70}$ of the optical glass of the present application is equal to or less than 440 nm, preferably equal to or less than 430 nm, and more preferably equal to or less than 425 nm.

In some embodiments, $\lambda_5$ of the optical glass of the present application is equal to or less than 400 nm, preferably equal to or less than 390 nm, and more preferably equal to or less than 385 nm.

<Climatic Resistance>

The climatic resistance (CR) of the optical glass is measured by the following method: The sample is placed in a test chamber with a saturated water vapor environment at 90% relative humidity, at a temperature alternating between 40 °C and 50 °C per hour. The testing lasts for 15 cycles. The climatic resistance is classified based on the change in haze of the sample before and after the testing, as shown in Table 1:

Table 1

| Grade | 1 | 2 | 3 | 4 | | |
|---|---|---|---|---|---|---|
| | | | | a | b | c |
| Increase in haze ΔH (%) | <0.3 | 0.3~1.0 | 1.0~2.0 | 2.0~4.0 | 4.0~6.0 | ≥6.0 |

In some embodiments, the climatic resistance (CR) of the optical glass of the present application is equal to or better than grade 2, preferably grade 1.

<Young's Modulus>

The longitudinal and transverse wave velocities of ultrasound wave traveling through the sample are measured, and the Young's modulus (E) is calculated using the following formula:

$$E = \frac{4G^2 - 3GV_T^2\rho}{G - V_T^2\rho}$$

$$G = V_S^2\rho$$

where: E is Young's modulus, Pa;

G is shear modulus, Pa;
$V_T$ is transverse wave velocity, m/s;
Vs is longitudinal wave velocity, m/s;
$\rho$ is density of glass, g/cm$^3$.

In some embodiments, the Young's modulus (E) of the optical glass of the present application is equal to or greater than $8000 \times 10^7$ Pa, preferably equal to or greater than $9000 \times 10^7$ Pa, and more preferably equal to or greater than $9500 \times 10^7$ Pa.

<Bubble Grade>

The bubble grade of the optical glass is measured according to the method specified in GB/T 7962.8-2010.

In some embodiments, the bubble grade of the optical glass of the present application is equal to or better than grade A, preferably is equal to or better than grade $A_0$, and more preferably is grade $A_{00}$.

[Manufacturing Method of Optical Glass]

The manufacturing method of the optical glass of the present application is as follows: The glass of the present application is manufactured using conventional raw materials and processes, including but not limited to using oxides, hydroxides, complex salts (such as carbonates, nitrates, sulfates, phosphates, metaphosphates, etc.), boric acid, etc. as raw materials. After batching the raw materials according to conventional methods, the prepared batch is charged into a melting furnace (such as a platinum or platinum alloy crucible) at 1050 °C to 1250 °C, preferably 1100 °C to 1200 °C, for melting. After clarification and homogenization, a homogeneous molten glass free of bubbles and undissolved substances is obtained. This molten glass is cast into a mold and annealed. The skilled person in the art can appropriately select raw materials, methods, and parameters according to actual needs.

[Glass Preform and Optical Element]

Glass preforms can be produced from the obtained optical glass by methods such as gob feeding, or grinding and polishing, or press molding such as hot-press forming. The optical glass can be directly melted and subjected to gob feeding to form glass precise preforms, or can be subjected to mechanical processing such as grinding and polishing to form glass preforms, or can be formed into bricks for press molding, reheated and press-molded, followed by grinding and polishing to produce glass preforms. It should be noted that the methods for preparing the glass preform are not limited to the above-mentioned approaches.

As described above, the optical glass of the present application is useful for various optical elements and optical designs. Preferably, the optical elements such as lenses and prisms can be prepared by forming preforms from the optical glass and subjecting the preforms to reheating press molding or precision press molding.

The glass preforms and optical elements of the present application are all made of the above-described optical glass and inherit the excellent performance of the optical glass. The various optical elements can be such as lenses and prisms with high optical value.

Examples of lenses include various lenses such as concave meniscus lenses, convex meniscus lenses, biconvex lenses, biconcave lenses, plano-convex lenses, and plano-concave lenses, where the lens surfaces are spherical or aspherical.

[Optical Instrument]

An optical element made of the optical glass of the present application can be used to manufacture an optical instrument such as photographic equipment, imaging equipment, projection equipment, display equipment, vehicle-mounted equipment, and surveillance equipment.

Examples

<Optical Glass Examples>

To further clarify and illustrate the technical solutions of the present application, the following non-limiting examples are provided.

In these examples, optical glasses having the compositions shown in Tables 2 to 4 were obtained using the above-described manufacturing method of optical glass. In addition, the properties of each glass were measured by the testing methods described in the present application, and the measurement results are shown in Tables 2 to 4.

Table 2

| Example (wt%) | 1# | 2# | 3# | 4# | 5# | 6# | 7# |
|---|---|---|---|---|---|---|---|
| $P_2O_5$ | 20.35 | 17.22 | 31.14 | 29.5 | 18.42 | 21.27 | 23.42 |
| $Nb_2O_5$ | 50.04 | 45.13 | 40.56 | 47.73 | 49.77 | 54.21 | 52.97 |
| $TiO_2$ | 2.25 | 11.35 | 3.78 | 4.12 | 9.26 | 7.15 | 5.18 |
| BaO | 3.62 | 5.22 | 12.2 | 10.16 | 2.47 | 4.62 | 9.25 |
| CaO | 1.25 | 4.15 | 5.33 | 0.5 | 3.21 | 2.46 | 1.77 |
| MgO | 1 | 0 | 0.5 | 0 | 0 | 0 | 0 |
| SrO | 0 | 0 | 0 | 1.2 | 0 | 0 | 0 |
| ZnO | 5.15 | 0.88 | 3.34 | 2.56 | 1.73 | 4.25 | 1.56 |
| $Li_2O$ | 0 | 0 | 0 | 0 | 0.8 | 0 | 0.5 |
| $Na_2O$ | 13.44 | 14.35 | 1.7 | 3.63 | 12.54 | 4.82 | 5.35 |

(continued)

| Example (wt%) | 1# | 2# | 3# | 4# | 5# | 6# | 7# |
|---|---|---|---|---|---|---|---|
| $K_2O$ | 0 | 0 | 0.35 | 0 | 0 | 0 | 0 |
| $La_2O_3$ | 0 | 0 | 0 | 0 | 0 | 1 | 0 |
| $Gd_2O_3$ | 0 | 0 | 0 | 0 | 0 | 0 | 0 |
| $Y_2O_3$ | 1 | 0 | 0 | 0 | 0.7 | 0 | 0 |
| $Yb_2O_3$ | 0 | 0 | 0 | 0 | 0 | 0 | 0 |
| $Lu_2O_3$ | 0 | 0 | 0 | 0 | 0 | 0 | 0 |
| $SiO_2$ | 0.35 | 0 | 0 | 0.5 | 0 | 0.22 | 0 |
| $B_2O_3$ | 0 | 0 | 1 | 0.1 | 0 | 0 | 0 |
| $Al_2O_3$ | 0 | 0.7 | 0 | 0 | 0 | 0 | 0 |
| $WO_3$ | 0.5 | 0 | 0 | 0 | 0.6 | 0 | 0 |
| $ZrO_2$ | 1 | 0 | 0 | 0 | 0 | 0 | 0 |
| $Bi_2O_3$ | 0 | 1 | 0 | 0 | 0.5 | 0 | 0 |
| $TeO_2$ | 0 | 0 | 0 | 0 | 0 | 0 | 0 |
| $Sb_2O_3$ | 0.05 | 0 | 0.1 | 0 | 0 | 0 | 0 |
| $SnO_2$ | 0 | 0 | 0 | 0 | 0 | 0 | 0 |
| $CeO_2$ | 0 | 0 | 0 | 0 | 0 | 0 | 0 |
| Total | 100 | 100 | 100 | 100 | 100 | 100 | 100 |
| $(B_2O_3+WO_3+Bi_2O_3)$ /ZnO | 0.10 | 1.14 | 0.30 | 0.04 | 0.64 | 0 | 0 |
| ZnO/BaO | 1.42 | 0.17 | 0.27 | 0.25 | 0.70 | 0.92 | 0.17 |
| $(B_2O_3+Li_2O+K_2O)$ /ZnO | 0 | 0 | 0.40 | 0.04 | 0.46 | 0 | 0.32 |
| $(P_2O_5+BaO)$ / $(ZnO+CaO)$ | 3.75 | 4.46 | 5.0 | 12.96 | 4.23 | 3.86 | 9.81 |
| $(Na_2O+K_2O)$ /$Nb_2O_5$ | 0.27 | 0.32 | 0.05 | 0.08 | 0.25 | 0.09 | 0.10 |
| $(BaO+K_2O+ZnO)$ / $(Na_2O+CaO)$ | 0.60 | 0.33 | 2.26 | 3.08 | 0.27 | 1.22 | 1.52 |
| $(TiO_2+K_2O)$ /$P_2O_5$ | 0.11 | 0.66 | 0.13 | 0.14 | 0.50 | 0.34 | 0.22 |
| $(Ln_2O_3+Li_2O+K_2O+WO_3+Bi_2O_3)$ /$TiO_2$ | 0.67 | 0.09 | 0.09 | 0 | 0.28 | 0.14 | 0.10 |
| $(WO_3+ TiO_2)$ /$Nb_2O_5$ | 0.05 | 0.25 | 0.09 | 0.09 | 0.20 | 0.13 | 0.10 |
| $ZnO/TiO_2$ | 2.29 | 0.08 | 0.88 | 0.62 | 0.19 | 0.59 | 0.30 |
| $TiO_2/BaO$ | 0.62 | 2.17 | 0.31 | 0.41 | 3.75 | 1.55 | 0.56 |
| ZnO/ $(Na_2O+TiO_2)$ | 0.33 | 0.03 | 0.61 | 0.33 | 0.08 | 0.36 | 0.15 |
| $TiO_2/CaO$ | 1.80 | 2.73 | 0.71 | 8.24 | 2.88 | 2.91 | 2.93 |
| $n_d$ | 1.87346 | 1.88273 | 1.86505 | 1.88036 | 1.91526 | 1.92455 | 1.91873 |
| $v_d$ | 22.45 | 21.74 | 23.72 | 20.37 | 18.36 | 16.53 | 17.47 |
| $\alpha_{100/300°C}$ ($\times 10^{-7}$/K) | 87 | 86 | 89 | 92 | 90 | 86 | 88 |
| $D_A$ | Grade 2 | Grade 1 | Grade 1 | Grade 1 | Grade 2 | Grade 1 | Grade 1 |
| $D_W$ | Grade 1 | Grade 1 | Grade 1 | Grade 1 | Grade 2 | Grade 1 | Grade 1 |
| Pg,F | 0.6062 | 0.6615 | 0.6654 | 0.6756 | 0.7011 | 0.6156 | 0.6385 |
| $\Delta P_{g,F}$ | 0.0485 | 0.0516 | 0.0532 | 0.0533 | 0.0612 | 0.0453 | 0.0139 |
| $T_g$ (°C) | 656 | 661 | 650 | 648 | 660 | 658 | 655 |
| $F_A$ | 262 | 240 | 263 | 261 | 244 | 245 | 243 |

(continued)

| Example (wt%) | 1# | 2# | 3# | 4# | 5# | 6# | 7# |
|---|---|---|---|---|---|---|---|
| E ($\times 10^7$Pa) | 8875 | 8936 | 9356 | 9468 | 9265 | 9475 | 9538 |
| $\rho$ (g/cm$^3$) | 3.70 | 3.80 | 3.68 | 3.66 | 3.75 | 3.65 | 3.64 |
| $\lambda_{70}$ (nm) | 427 | 434 | 426 | 425 | 435 | 426 | 430 |
| $\lambda_5$ (nm) | 385 | 395 | 386 | 384 | 396 | 385 | 391 |
| CR | Grade 1 | Grade 1 | Grade 1 | Grade 1 | Grade 1 | Grade 1 | Grade 1 |
| Babble Grade (Grade) | $A_0$ | A | $A_0$ | $A_{00}$ | A | $A_0$ | $A_{00}$ |

Table 3

| Example (wt%) | 8# | 9# | 10# | 11# | 12# | 13# | 14# |
|---|---|---|---|---|---|---|---|
| $P_2O_5$ | 28.26 | 22.74 | 24.15 | 26.48 | 25.52 | 26.23 | 27.54 |
| $Nb_2O_5$ | 44.69 | 45.36 | 51.72 | 45.27 | 52.65 | 50.92 | 44.93 |
| $TiO_2$ | 8.22 | 6.53 | 4.24 | 7.12 | 6.84 | 5.37 | 8.05 |
| BaO | 8.36 | 11.05 | 6.35 | 7.28 | 5.35 | 4.16 | 5.88 |
| CaO | 1.64 | 2.05 | 3.13 | 2.25 | 1.67 | 1.38 | 2.18 |
| MgO | 0 | 0 | 0 | 0 | 0 | 0 | 0 |
| SrO | 0 | 0 | 0 | 0 | 0 | 0 | 0 |
| ZnO | 2.47 | 3.05 | 2.18 | 2.35 | 1.63 | 1.82 | 2.25 |
| $Li_2O$ | 0 | 1.22 | 0 | 0 | 0 | 0 | 0 |
| $Na_2O$ | 3.26 | 6.15 | 7.33 | 8.25 | 6.34 | 10.12 | 9.17 |
| $K_2O$ | 1 | 0 | 0 | 0 | 0 | 0 | 0 |
| $La_2O_3$ | 0 | 0.5 | 0 | 0 | 0 | 0 | 0 |
| $Gd_2O_3$ | 1 | 0 | 0 | 0 | 0 | 0 | 0 |
| $Y_2O_3$ | 0 | 0 | 0 | 0 | 0 | 0 | 0 |
| $Yb_2O_3$ | 0 | 0 | 0 | 0 | 0 | 0 | 0 |
| $Lu_2O_3$ | 0 | 0 | 0 | 0 | 0 | 0 | 0 |
| $SiO_2$ | 0 | 1 | 0 | 0 | 0 | 0 | 0 |
| $B_2O_3$ | 0 | 0.35 | 0.5 | 0 | 0 | 0 | 0 |
| $Al_2O_3$ | 1 | 0 | 0 | 0 | 0 | 0 | 0 |
| $WO_3$ | 0 | 0 | 0.35 | 1 | 0 | 0 | 0 |
| $ZrO_2$ | 0 | 0 | 0 | 0 | 0 | 0 | 0 |
| $Bi_2O_3$ | 0 | 0 | 0 | 0 | 0 | 0 | 0 |
| $TeO_2$ | 0 | 0 | 0 | 0 | 0 | 0 | 0 |
| $Sb_2O_3$ | 0 | 0 | 0 | 0 | 0 | 0 | 0 |
| $SnO_2$ | 0.1 | 0 | 0.05 | 0 | 0 | 0 | 0 |
| $CeO_2$ | 0 | 0 | 0 | 0 | 0 | 0 | 0 |
| Total | 100 | 100 | 100 | 100 | 100 | 100 | 100 |
| $(B_2O_3+WO_3+Bi_2O_3)$ /ZnO | 0 | 0.11 | 0.39 | 0.43 | 0 | 0 | 0 |
| ZnO/BaO | 0.30 | 0.28 | 0.34 | 0.32 | 0.30 | 0.44 | 0.38 |
| $(B_2O_3+Li_2O+K_2O)$ /ZnO | 0.40 | 0.51 | 0.23 | 0 | 0 | 0 | 0 |

(continued)

| Example (wt%) | 8# | 9# | 10# | 11# | 12# | 13# | 14# |
|---|---|---|---|---|---|---|---|
| $(P_2O_5+BaO)$ / $(ZnO+CaO)$ | 8.91 | 6.63 | 5.74 | 7.34 | 9.35 | 9.50 | 7.54 |
| $(Na_2O+K_2O)$ /$Nb_2O_5$ | 0.10 | 0.14 | 0.14 | 0.18 | 0.12 | 0.20 | 0.20 |
| $(BaO+K_2O+ZnO)$ / $(Na_2O+CaO)$ | 2.41 | 1.72 | 0.82 | 0.92 | 0.87 | 0.52 | 0.72 |
| $(TiO_2+K_2O)$ /$P_2O_5$ | 0.33 | 0.29 | 0.18 | 0.27 | 0.27 | 0.20 | 0.29 |
| $(Ln_2O_3+Li_2O+K_2O+WO_3+Bi_2O_3)$ /$TiO_2$ | 0.24 | 0.26 | 0.08 | 0.14 | 0 | 0 | 0 |
| $(WO_3+TiO_2)$ /$Nb_2O_5$ | 0.18 | 0.14 | 0.09 | 0.18 | 0.13 | 0.11 | 0.18 |
| $ZnO/TiO_2$ | 0.30 | 0.47 | 0.51 | 0.33 | 0.24 | 0.34 | 0.28 |
| $TiO_2/BaO$ | 0.98 | 0.59 | 0.67 | 0.98 | 1.28 | 1.29 | 1.37 |
| $ZnO/$ $(Na_2O+TiO_2)$ | 0.22 | 0.24 | 0.19 | 0.15 | 0.12 | 0.12 | 0.13 |
| $TiO_2/CaO$ | 5.01 | 3.19 | 1.35 | 3.16 | 4.10 | 3.89 | 3.69 |
| $n_d$ | 1.88364 | 1.87693 | 1.88756 | 1.88162 | 1.90237 | 1.89042 | 1.88075 |
| $v_d$ | 19.56 | 22.16 | 21.34 | 20.76 | 20.15 | 19.85 | 21.08 |
| $\alpha_{100/300°C}$ $(\times 10^{-7}/K)$ | 81 | 80 | 86 | 83 | 82 | 80 | 78 |
| $D_A$ | Grade 1 | Grade 2 | Grade 1 | Grade 1 | Grade 1 | Grade 1 | Grade 1 |
| Dw | Grade 1 | Grade 1 | Grade 1 | Grade 1 | Grade 1 | Grade 1 | Grade 1 |
| $P_{g,F}$ | 0.6439 | 0.6623 | 0.6407 | 0.6414 | 0.6521 | 0.6388 | 0.6337 |
| $\Delta P_{g,F}$ | 0.0275 | 0.0416 | 0.0313 | 0.0225 | 0.0276 | 0.0324 | 0.0300 |
| $T_g$ (°C) | 650 | 647 | 643 | 644 | 648 | 646 | 642 |
| $F_A$ | 241 | 242 | 248 | 252 | 254 | 251 | 253 |
| E $(\times 10^7 Pa)$ | 9385 | 9408 | 9637 | 9593 | 9701 | 9744 | 9702 |
| $\rho$ $(g/cm^3)$ | 3.67 | 3.63 | 3.70 | 3.73 | 3.68 | 3.65 | 3.62 |
| $\lambda_{70}$ (nm) | 422 | 424 | 428 | 426 | 420 | 422 | 424 |
| $\lambda_5$ (nm) | 381 | 385 | 387 | 387 | 378 | 382 | 382 |
| CR | Grade 1 | Grade 1 | Grade 1 | Grade 1 | Grade 1 | Grade 1 | Grade 1 |
| Babble Grade (Grade) | $A_0$ | $A_0$ | $A_{00}$ | $A_{00}$ | $A_{00}$ | $A_{00}$ | $A_{00}$ |

Table 4

| Example (wt%) | 15# | 16# | 17# | 18# | 19# | 20# | 21# |
|---|---|---|---|---|---|---|---|
| $P_2O_5$ | 25.17 | 25.66 | 27.38 | 26.16 | 28.03 | 25.22 | 26.15 |
| $Nb_2O_5$ | 47.95 | 50.54 | 51.69 | 53.89 | 46.11 | 53.36 | 51.06 |
| $TiO_2$ | 6.25 | 7.13 | 5.53 | 4.66 | 5.78 | 5.36 | 6.15 |
| BaO | 7.23 | 6.38 | 5.25 | 4.72 | 6.73 | 5.82 | 6.22 |
| CaO | 2.65 | 1.42 | 1.83 | 1.52 | 2.28 | 1.36 | 2.11 |
| MgO | 0 | 0 | 0 | 0 | 0 | 0 | 0 |
| SrO | 0 | 0 | 0 | 0 | 0 | 0 | 0 |
| ZnO | 2.37 | 1.65 | 1.75 | 2.23 | 2.55 | 1.35 | 2.03 |
| $Li_2O$ | 0 | 0 | 0 | 0 | 0 | 0 | 0 |
| $Na_2O$ | 8.38 | 7.22 | 6.57 | 6.82 | 8.52 | 7.53 | 6.28 |
| $K_2O$ | 0 | 0 | 0 | 0 | 0 | 0 | 0 |

(continued)

| Example (wt%) | 15# | 16# | 17# | 18# | 19# | 20# | 21# |
|---|---|---|---|---|---|---|---|
| $La_2O_3$ | 0 | 0 | 0 | 0 | 0 | 0 | 0 |
| $Gd_2O_3$ | 0 | 0 | 0 | 0 | 0 | 0 | 0 |
| $Y_2O_3$ | 0 | 0 | 0 | 0 | 0 | 0 | 0 |
| $Yb_2O_3$ | 0 | 0 | 0 | 0 | 0 | 0 | 0 |
| $Lu_2O_3$ | 0 | 0 | 0 | 0 | 0 | 0 | 0 |
| $SiO_2$ | 0 | 0 | 0 | 0 | 0 | 0 | 0 |
| $B_2O_3$ | 0 | 0 | 0 | 0 | 0 | 0 | 0 |
| $Al_2O_3$ | 0 | 0 | 0 | 0 | 0 | 0 | 0 |
| $WO_3$ | 0 | 0 | 0 | 0 | 0 | 0 | 0 |
| $ZrO_2$ | 0 | 0 | 0 | 0 | 0 | 0 | 0 |
| $Bi_2O_3$ | 0 | 0 | 0 | 0 | 0 | 0 | 0 |
| $TeO_2$ | 0 | 0 | 0 | 0 | 0 | 0 | 0 |
| $Sb_2O_3$ | 0 | 0 | 0 | 0 | 0 | 0 | 0 |
| $SnO_2$ | 0 | 0 | 0 | 0 | 0 | 0 | 0 |
| $CeO_2$ | 0 | 0 | 0 | 0 | 0 | 0 | 0 |
| Total | 100 | 100 | 100 | 100 | 100 | 100 | 100 |
| $(B_2O_3+WO_3+Bi_2O_3)/ZnO$ | 0 | 0 | 0 | 0 | 0 | 0 | 0 |
| $ZnO/BaO$ | 0.33 | 0.26 | 0.33 | 0.47 | 0.38 | 0.23 | 0.33 |
| $(B_2O_3+Li_2O+K_2O)/ZnO$ | 0 | 0 | 0 | 0 | 0 | 0 | 0 |
| $(P_2O_5+BaO)/(ZnO+CaO)$ | 6.45 | 10.44 | 9.11 | 8.23 | 7.20 | 11.45 | 7.82 |
| $(Na_2O+K_2O)/Nb_2O_5$ | 0.17 | 0.14 | 0.13 | 0.13 | 0.18 | 0.14 | 0.12 |
| $(BaO+K_2O+ZnO)/(Na_2O+CaO)$ | 0.87 | 0.93 | 0.83 | 0.83 | 0.86 | 0.81 | 0.98 |
| $(TiO_2+K_2O)/P_2O_5$ | 0.25 | 0.28 | 0.20 | 0.18 | 0.21 | 0.21 | 0.24 |
| $(Ln_2O_3+Li_2O+K_2O+WO_3+Bi_2O_3)/TiO_2$ | 0 | 0 | 0 | 0 | 0 | 0 | 0 |
| $(WO_3+TiO_2)/Nb_2O_5$ | 0.13 | 0.14 | 0.11 | 0.09 | 0.13 | 0.10 | 0.12 |
| $ZnO/TiO_2$ | 0.38 | 0.23 | 0.32 | 0.48 | 0.44 | 0.25 | 0.33 |
| $TiO_2/BaO$ | 0.86 | 1.12 | 1.05 | 0.99 | 0.86 | 0.92 | 0.99 |
| $ZnO/(Na_2O+TiO_2)$ | 0.16 | 0.11 | 0.14 | 0.19 | 0.18 | 0.10 | 0.16 |
| $TiO_2/CaO$ | 2.36 | 5.02 | 3.02 | 3.07 | 2.54 | 3.94 | 2.91 |
| $n_d$ | 1.88934 | 1.89356 | 1.89172 | 1.89518 | 1.87565 | 1.89352 | 1.89284 |
| $v_d$ | 20.72 | 20.45 | 20.85 | 19.93 | 21.85 | 20.37 | 20.55 |
| $\alpha_{100/300°C}$ $(\times 10^{-7}/K)$ | 81 | 80 | 78 | 80 | 79 | 81 | 82 |
| $D_A$ | Grade 1 | Grade 1 | Grade 1 | Grade 1 | Grade 1 | Grade 1 | Grade 1 |
| $Dw$ | Grade 1 | Grade 1 | Grade 1 | Grade 1 | Grade 1 | Grade 1 | Grade 1 |
| $P_{g,F}$ | 0.6504 | 0.6418 | 0.6395 | 0.6424 | 0.6411 | 0.6393 | 0.6408 |
| $\Delta P_{g,F}$ | 0.0288 | 0.0317 | 0.0279 | 0.0308 | 0.0321 | 0.0292 | 0.0289 |
| $T_g$ (°C) | 641 | 643 | 640 | 648 | 644 | 638 | 642 |
| $F_A$ | 252 | 250 | 256 | 252 | 254 | 253 | 250 |
| $E$ $(\times 10^7 Pa)$ | 9658 | 9675 | 9714 | 9730 | 9722 | 9715 | 9724 |

(continued)

| Example (wt%) | 15# | 16# | 17# | 18# | 19# | 20# | 21# |
|---|---|---|---|---|---|---|---|
| $\rho$ (g/cm$^3$) | 3.60 | 3.64 | 3.63 | 3.62 | 3.63 | 3.61 | 3.62 |
| $\lambda_{70}$ (nm) | 425 | 420 | 417 | 420 | 418 | 422 | 420 |
| $\lambda_5$ (nm) | 383 | 381 | 375 | 378 | 380 | 381 | 380 |
| CR | Grade 1 | Grade 1 | Grade 1 | Grade 1 | Grade 1 | Grade 1 | Grade 1 |
| Babble Grade (Grade) | $A_{00}$ | $A_{00}$ | $A_{00}$ | $A_{00}$ | $A_{00}$ | $A_{00}$ | $A_{00}$ |

<Glass Preform Examples>

The optical glasses obtained in Examples 1# to 21# were processed using methods such as grinding and polishing, or press molding such as reheating press molding or precision press molding, to produce various preforms. The preforms were prisms or lenses such as concave meniscus lenses, convex meniscus lenses, biconvex lenses, biconcave lenses, plano-convex lenses, and plano-concave lenses.

<Optical Element Examples>

The preforms obtained in the above glass preform examples can be annealed to reduce internal stress in the glass and slightly adjust the refractive index, allowing the optical performance such as the refractive index to achieve the desired values.

Subsequently, the preforms can be subjected to grinding and polishing to obtain prisms or lenses including concave meniscus lenses, convex meniscus lenses, biconvex lenses, biconcave lenses, plano-convex lenses, and plano-concave lenses. The surfaces of the resulting optical elements can be coated with anti-reflection films.

<Optical Instrument Examples>

Through optical designs, one or more of the optical elements prepared in the above optical element examples can be used to form optical parts or assemblies, which can be applied in imaging equipment, sensors, microscopes, medical technology, digital projection, communications, optical communication technology/information transmission, optics/illumination in the automotive field, lithography technology, excimer lasers, wafers, computer chips, and integrated circuits and electronic devices incorporating such circuits and chips.

**Claims**

1.    An optical glass comprising following components in percent by weight: $P_2O_5$: 16% to 33%; $Nb_2O_5$: 40% to 55%; $TiO_2$: 1% to 13%; BaO: 1% to 15%; $Na_2O$: 0.5% to 15%.

2.    The optical glass according to claim 1, further comprising following components in percent by weight: CaO: 0 to 8%; and/or MgO: 0 to 5%; and/or SrO: 0 to 5%; and/or ZnO: 0 to 8%; and/or $Li_2O$: 0 to 5%; and/or $K_2O$: 0 to 5%; and/or $Ln_2O_3$: 0 to 5%; and/or $SiO_2$: 0 to 5%; and/or $B_2O_3$: 0 to 5%; and/or $Al_2O_3$: 0 to 3%; and/or $WO_3$: 0 to 3%; and/or $ZrO_2$: 0 to 5%; and/or $Bi_2O_3$: 0 to 3%; and/or $TeO_2$: 0 to 5%; and/or a clarifying agent: 0 to 1%, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

3.    An optical glass consisting of following components in percent by weight: $P_2O_5$: 16% to 33%; $Nb_2O_5$: 40% to 55%; $TiO_2$: 1% to 13%; BaO: 1% to 15%; $Na_2O$: 0.5% to 15%; CaO: 0 to 8%; MgO: 0 to 5%; SrO: 0 to 5%; ZnO: 0 to 8%; $Li_2O$: 0 to 5%; $K_2O$: 0 to 5%; $Ln_2O_3$: 0 to 5%; $SiO_2$: 0 to 5%; $B_2O_3$: 0 to 5%; $Al_2O_3$: 0 to 3%; $WO_3$: 0 to 3%; $ZrO_2$: 0 to 5%; $Bi_2O_3$: 0 to 3%; $TeO_2$: 0 to 5%; a clarifying agent: 0 to 1%, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

4.    The optical glass according to any one of claims 1 to 3, wherein the components in percent by weight satisfy one or more of following 13 conditions:

   1) $(B_2O_3+WO_3+Bi_2O_3)/ZnO$ is equal to or lower than 2.0, preferably is equal to or lower than 1.0, more preferably is equal to or lower than 0.5, and even more preferably is equal to or lower than 0.2;

2) ZnO/BaO is equal to or lower than 3.0, preferably is in a range from 0.05 to 2.0, more preferably is in a range from 0.1 to 1.5, and even more preferably is in a range from 0.2 to 0.8;

3) $(B_2O_3+Li_2O+K_2O)/ZnO$ is equal to or lower than 2.0, preferably is equal to or lower than 1.0, more preferably is equal to or lower than 0.5, and even more preferably is equal to or lower than 0.2;

4) $(P_2O_5+BaO)/(ZnO+CaO)$ is equal to or lower than 2.0, preferably is in a range from 3.0 to 20.0, more preferably is in a range from 5.0 to 15.0, and even more preferably is in a range from 8.0 to 12.0;

5) $(Na_2O+K_2O)/Nb_2O_5$ is in a range from 0.05 to 0.45, preferably in a range from 0.1 to 0.4, more preferably in a range from 0.1 to 0.3, and even more preferably in a range from 0.1 to 0.25;

6) $(BaO+K_2O+ZnO)/(Na_2O+CaO)$ is in a range from 0.1 to 8.0, preferably is in a range from 0.2 to 5.0, more preferably is in a range from 0.3 to 2.5, and even more preferably is in a range from 0.5 to 1.5;

7) $(TiO_2+K_2O)/P_2O_5$ is in a range from 0.05 to 0.8, preferably is in a range from 0.1 to 0.6, more preferably is in a range from 0.1 to 0.5, and even more preferably is in a range from 0.15 to 0.4;

8) $(Ln_2O_3+Li_2O+K_2O+WO_3+Bi_2O_3)/TiO_2$ is equal to or lower than 0.8, preferably is equal to or lower than 0.5, more preferably is equal to or lower than 0.3, and even more preferably is equal to or lower than 0.1;

9) $(WO_3+TiO_2)/Nb_2O_5$ is in a range from 0.02 to 0.3, preferably is in a range from 0.05 to 0.25, more preferably is in a range from 0.05 to 0.2, and even more preferably is in a range from 0.07 to 0.17;

10) $ZnO/TiO_2$ is equal to or lower than 3.0, preferably is in a range from 0.01 to 2.0, more preferably is in a range from 0.1 to 1.5, and even more preferably is in a range from 0.2 to 0.8;

11) $TiO_2/BaO$ is in a range from 0.2 to 8.0, preferably is in a range from 0.3 to 5.0, more preferably is in a range from 0.5 to 3.0, and even more preferably is in a range from 0.6 to 1.5;

12) $ZnO/(Na_2O+TiO_2)$ is equal to or lower than 2.0, preferably is in a range from 0.01 to 1.5, more preferably is in a range from 0.05 to 0.8, and even more preferably is in a range from 0.05 to 0.4;

13) $TiO_2/CaO$ is in a range from 0.5 to 10.0, preferably is in a range from 1.0 to 8.0, more preferably is in a range from 2.0 to 7.0, and even more preferably is in a range from 2.5 to 6.0,

wherein $Ln_2O_3$ is one or more selected from $La_2O_3$, $Gd_2O_3$, $Y_2O_3$, $Yb_2O_3$ and $Lu_2O_3$.

5. The optical glass according to any one of claims 1 to 3, wherein the components in percent by weight satisfy: $P_2O_5$: 20% to 30%, preferably $P_2O_5$: 22% to 28%; and/or $Nb_2O_5$: 45% to 55%, preferably $Nb_2O_5$: 46% to 53%; and/or $TiO_2$: 3% to 10%, preferably $TiO_2$: 4% to 8%; and/or BaO: 2% to 12%, preferably BaO: 3% to 9%; and/or $Na_2O$: 3% to 12%, preferably $Na_2O$: 6% to 10%; and/or CaO: more than 0 but less than or equal to 6%, preferably CaO: 1% to 4%; and/or MgO: 0 to 3%, preferably MgO: 0 to 1%; and/or SrO: 0 to 3%, preferably SrO: 0 to 1%; and/or ZnO: more than 0 but less than or equal to 6%, preferably ZnO: 1% to 4%; and/or $Li_2O$: 0 to 3%, preferably $Li_2O$: 0 to 1%; and/or $K_2O$: 0 to 3%, preferably $K_2O$: 0 to 1%; and/or $Ln_2O_3$: 0 to 3%, preferably $Ln_2O_3$: 0 to 1%; and/or $SiO_2$: 0 to 3%, preferably $SiO_2$: 0 to 1%; and/or $B_2O_3$: 0 to 3%, preferably $B_2O_3$: 0 to 1%; and/or $Al_2O_3$: 0 to 2%, preferably $Al_2O_3$ 0 to 1%; and/or $WO_3$: 0 to 2%, preferably $WO_3$: 0 to 1%; and/or $ZrO_2$: 0 to 3%, preferably $ZrO_2$: 0 to 1%; and/or $Bi_2O_3$: 0 to 2%, preferably $Bi_2O_3$: 0 to 1%; and/or $TeO_2$: 0 to 3%, preferably $TeO_2$: 0 to 1%; and/or the clarifying agent: 0 to 0.5%, preferably the clarifying agent: 0 to 0.1%, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

6. The optical glass according to any one of claims 1 to 3, comprising no MgO; and/or comprises no SrO; and/or comprising no $Li_2O$; and/or comprising no $K_2O$; and/or comprising no $Ln_2O_3$; and/or comprising no $B_2O_3$; and/or comprising no $Al_2O_3$; and/or comprising no $WO_3$; and/or comprising no $ZrO_2$; and/or comprising no $Bi_2O_3$; and/or comprising no $TeO_2$; and/or comprising no clarifying agent, wherein $Ln_2O_3$ is one or more selected from $La_2O_3$, $Gd_2O_3$, $Y_2O_3$, $Yb_2O_3$, and $Lu_2O_3$, and the clarifying agent is one or more selected from $Sb_2O_3$, $SnO_2$, and $CeO_2$.

7. The optical glass according to any one of claims 1 to 3, wherein a refractive index $n_d$ of the optical glass is in a range from 1.86 to 1.93, preferably in a range from 1.87 to 1.92, and more preferably in a range from 1.88 to 1.91; an Abbe number $v_d$ is in a range from 16 to 24, preferably in a range from 17 to 23, and more preferably in a range from 18 to 22.

8. The optical glass according to any one of claims 1 to 3, wherein a thermal expansion coefficient $\alpha_{100/300°C}$ of the optical glass is equal to or less than $95\times10^{-7}$/K, preferably is equal to or less than $90\times10^{-7}$/K, and more preferably is equal to or less than $85\times10^{-7}$/K; and/or a durability of acid $D_A$ of the optical glass is equal to or better than grade 2, preferably is grade 1; and/or a durability of water Dw of the optical glass is equal to or better than grade 2, preferably is grade 1; and/or a relative partial dispersion $P_{g,F}$ of the optical glass is in a range from 0.58 to 0.72, preferably in a range from 0.60 to 0.68, and more preferably in a range from 0.63 to 0.66; and/or a deviation of relative partial dispersion $\Delta P_{g,F}$ of the optical glass is equal to or less than 0.08, preferably is in a range from 0.01 to 0.06, and more preferably is in a range from 0.02 to 0.05; and/or a glass transition temperature $T_g$ of the optical glass is equal to or lower than 670 °C, preferably is equal to or lower than 660 °C, and more preferably is equal to or lower than 650 °C; and/or an abrasion hardness $F_A$ of the optical glass is in a range from 230 to 270, preferably in a range from 240 to 265, and more preferably in a range from 245 to 260; and/or a density $\rho$ of the optical glass is equal to or less than 3.90 g/cm³, preferably is equal to or less than 3.80 g/cm³, and more preferably is equal to or less 3.70 g/cm³; and/or $\lambda_{70}$ of the optical glass is equal to or less than 440 nm, preferably is equal to or less than 430 nm, and more preferably is equal to or less than 425 nm; and/or $\lambda_5$ of the optical glass is equal to or less than 400 nm, preferably is equal to or less than 390 nm, and more preferably is equal to or less than 385 nm; and/or a climatic resistance CR of the optical glass is equal to or better than grade 2, preferably is grade 1; and/or a Young's modulus E of the optical glass is equal to or greater than $8000 \times 10^7$ Pa, preferably is equal to or greater than $9000 \times 10^7$ Pa, and more preferably is equal to or greater than $9500 \times 10^7$ Pa; and/or a bubble grade of the optical glass is equal to or better than grade A, preferably is equal to or better than grade $A_0$, and more preferably is grade $A_{00}$.

9. A glass preform is made of the optical glass according to any one of claims 1 to 8.

10. An optical element is made of the optical glass according to any one of claims 1 to 8 or made from the glass preform according to claim 9.

11. An optical instrument comprising the optical glass according to any one of claims 1 to 8 or comprising the optical element according to claim 10.

## INTERNATIONAL SEARCH REPORT

| International application No. |
| --- |
| **PCT/CN2024/098002** |

| A. | CLASSIFICATION OF SUBJECT MATTER |
| --- | --- |

C03C3/21(2006.01)i;  C03C3/062(2006.01)i;  C03C3/068(2006.01)i

According to International Patent Classification (IPC) or to both national classification and IPC

| B. | FIELDS SEARCHED |
| --- | --- |

Minimum documentation searched (classification system followed by classification symbols)

IPC: C03C

Documentation searched other than minimum documentation to the extent that such documents are included in the fields searched

Electronic data base consulted during the international search (name of data base and, where practicable, search terms used)

ENTXT, EXTXTC, VEN, CNTXT, CNABS, ISI, CNKI: 玻璃, 光学, 折射率, 阿贝数, 氧化磷, 氧化铌, 氧化钛, 氧化钡, 氧化钠, 氧化钙, 氧化锌, glass, optical, refractive index, abbe number phosphorus oxide, niobium oxide, titanium oxide, barium oxide, sodium oxide, calcium oxide, zinc oxide, nd, vd, P2O5, Nb2O5, TiO2, BaO, Na2O, CaO, ZnO

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2015182898 A (OHARA K. K.) 22 October 2015 (2015-10-22)<br>claims 1-19, and description, paragraphs 0008-0066 and 0081, and table 3, embodiment 21 | 1-11 |
| X | JP 2019052089 A (OHARA K. K.) 04 April 2019 (2019-04-04)<br>claims 1-19, and description, paragraphs 0030-0066 and 0081, and table 3, embodiment 21 | 1-11 |
| A | JP 2014224025 A (HOYA CORP.) 04 December 2014 (2014-12-04)<br>entire document | 1-11 |
| A | JP 2015163564 A (OHARA K. K.) 10 September 2015 (2015-09-10)<br>entire document | 1-11 |
| PX | CN 117185651 A (CDGM GLASS CO., LTD.) 08 December 2023 (2023-12-08)<br>claims 1-13 | 1-11 |
| PX | CN 117185652 A (CDGM GLASS CO., LTD.) 08 December 2023 (2023-12-08)<br>claims 1-14 | 1-11 |
| PX | CN 117185653 A (CDGM GLASS CO., LTD.) 08 December 2023 (2023-12-08)<br>claims 1-13 | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 September 2024** | **07 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/098002**

| Patent document cited in search report | | | Publication date (day/month/year) | Patent family member(s) | | | Publication date (day/month/year) |
|---|---|---|---|---|---|---|---|
| JP | 2015182898 | A | 22 October 2015 | JP | 6656744 | B2 | 04 March 2020 |
| JP | 2019052089 | A | 04 April 2019 | JP | 7169870 | B2 | 11 November 2022 |
| JP | 2014224025 | A | 04 December 2014 | JP | 5826429 | B1 | 02 December 2015 |
| | | | | JP | 2016006012 | A | 14 January 2016 |
| | | | | JP | 2016040229 | A | 24 March 2016 |
| | | | | JP | 5793164 | B2 | 14 October 2015 |
| JP | 2015163564 | A | 10 September 2015 | None | | | |
| CN | 117185651 | A | 08 December 2023 | None | | | |
| CN | 117185652 | A | 08 December 2023 | None | | | |
| CN | 117185653 | A | 08 December 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101792258 A
- CN 1204073 C
- GB 796212010 T
- GB 7962162010 T
- GB 17129 T
- GB 7962202010 T
- GB 796282010 T